# EUROPEAN PATENT APPLICATION

(11) **EP 3 376 789 A1**
(43) Date of publication of application: **19.09.2018**
(21) Application number: 18160835.7
(22) Date of filing: 09.03.2018
(51) Int. Cl.: H04W 12/06, H04L 12/24, H04L 29/08, H04L 29/06

(54) **INFORMATION TERMINAL, INFORMATION PROCESSING APPARATUS, INFORMATION PROCESSING SYSTEM, INFORMATION PROCESSING METHOD, AND CARRIER MEANS**

(30) Priority: 17.03.2017 JP 2017053236
(71) Applicant: Ricoh Company Ltd., Ohta-ku Tokyo 143-8555 (JP)
(72) Inventor: Horiuchi, Takeshi, Tokyo 143-8555 (JP); Homma, Takeshi, Tokyo 143-8555 (JP); Takeda, Takafumi, Tokyo 143-8555 (JP); Soneda, Takuya, Tokyo 143-8555 (JP)
(74) Representative: Schwabe - Sandmair - Marx

(57) **Abstract**

An information terminal (10) includes: an obtainer (11) configured to obtain authentication data from a first information processing apparatus (30); a communicator (12) configured to receive a discovery request broadcast from a second information processing apparatus (40) and to transmit the obtained authentication data to the second information processing apparatus (40), the second information processing apparatus (40) residing on a network different from a network where the first information processing apparatus (30) resides; and a setter (13) configured to perform a setting operation for the information terminal (10) in accordance with a setting change request received from the second information processing apparatus (40) via the first information processing apparatus (30), the second information processing apparatus (40) being authenticated by the first information processing apparatus (30) using the authentication data.

## Description

### BACKGROUND

### Technical Field

The present invention relates to an information terminal, an information processing apparatus, an information processing system, an information processing method, and carrier means.

### Description of the Related Art

Currently, a device, such as a multifunction peripheral (MFP), placed in, for example, an office is managed by an administrator information processing apparatus placed in the office via a local area network (LAN). A device, such as a videoconference terminal, placed in, for example, an office is managed by, for example, a cloud server via the Internet (Japanese Translation of PCT International Application Publication No. JP-T-2009-520438). With the related art, it has been cumbersome for an administrator information processing apparatus placed in, for example, an office to change the settings of a device centrally managed by, for example, a cloud server.

### SUMMARY

Example embodiments of the present invention include an information terminal (10) comprising: an obtainer (11) configured to obtain authentication data from a first information processing apparatus (30); a communicator (12) configured to receive a discovery request broadcast from a second information processing apparatus (40) and to transmit the obtained authentication data to the second information processing apparatus (40), the second information processing apparatus (40) residing on a network different from a network where the first information processing apparatus (30) resides; and a setter (13) configured to perform a setting operation for the information terminal (10) in accordance with a setting change request received from the second information processing apparatus (40) via the first information processing apparatus (30), the second information processing apparatus (40) being authenticated by the first information processing apparatus (30) using the authentication data.

Example embodiments of the present invention include an information processing apparatus (30) including: a first transmitter (31) configured to transmit to an information terminal (10) authentication data for transferring authority to perform a setting operation for the information terminal (10); a receiver (32) configured to receive a setting change request for a setting change for the information terminal (10) and the authentication data from other information processing apparatus (40), the other information processing apparatus (40) residing on a network different from a network where the information processing apparatus (30) resides; an authenticator (33) configured to determine whether the setting change is allowed on the basis of the received authentication data; and a second transmitter (34) configured to transmit the received setting change request to the information terminal (10) based on a determination that the setting change is allowed.

Example embodiments of the present invention include an information processing apparatus (40) including: a communicator (41) configured to broadcast a discovery request for requesting a response from an information terminal (10) and to receive, from the information terminal (10) that receives the discovery request, authentication data of other information processing apparatus (30) for managing the information terminal (10), the information processing apparatus (40) residing on a network different from a network where the other information processing apparatus (30) resides; and a setter (42) configured to transmit a setting change request and the authentication data to the other information processing apparatus (30) in accordance with a user operation to perform a setting operation for the information terminal (10).

Example embodiments of the present invention include an information processing system (1) including the above-described information terminal (10), the first information processing apparatus (30), and the second information processing apparatus (40).

Example embodiments of the present invention include a method performed by any one of the above-described information terminal (10), the first information processing apparatus (30), and the second information processing apparatus (40), and carrier means such as a program for controlling any one of the above-described information terminal (10), the first information processing apparatus (30), and the second information processing apparatus (40).

With the disclosed technique, for example, an administrator information processing apparatus placed in, for example, an office can change the settings of a device centrally managed by, for example, a cloud server.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a diagram illustrating an example overall configuration of an information processing system according to an embodiment;
FIG. 2 is a block diagram illustrating an example hardware configuration of a wide area network (WAN) device according to an embodiment;
FIG. 3 is a block diagram illustrating an example hardware configuration of a WAN device management apparatus and a LAN device management apparatus according to an embodiment;
FIG. 4 is a functional block diagram illustrating an example functional configuration of the information processing system according to an embodiment;
FIG. 5 is a sequence chart illustrating an example process for managing a LAN device;
FIG. 6 is a sequence chart illustrating an example process for managing the WAN device; and
FIG. 7 is a diagram illustrating an example management screen of the LAN device management apparatus.

The accompanying drawings are intended to depict embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Hereinafter, an embodiment of the present invention will be described with reference to the attached drawings.

### Example Overall Configuration

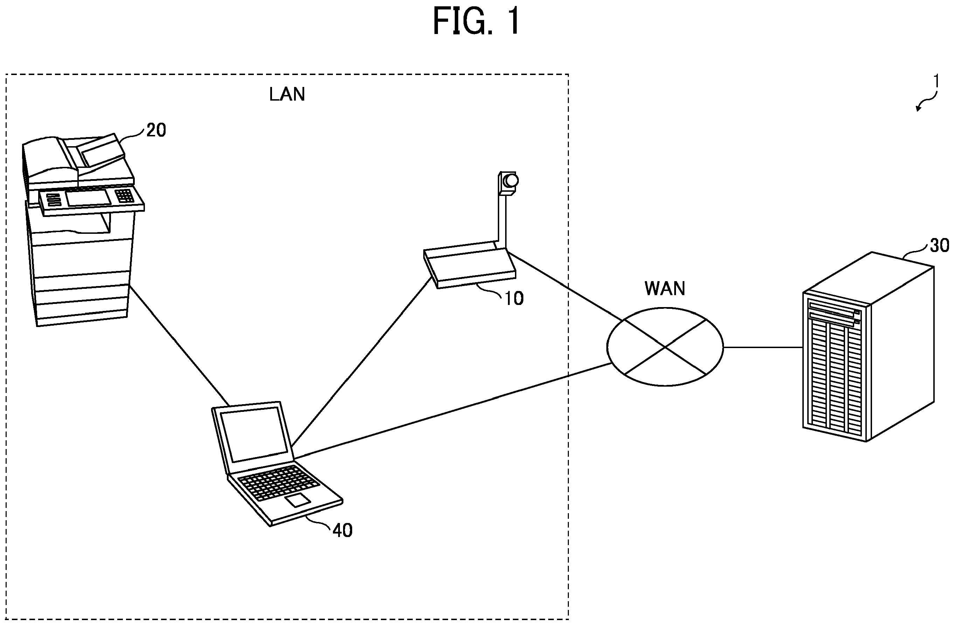

FIG. 1 is a diagram illustrating an example overall configuration of an information processing system 1 according to an embodiment. The information processing system 1 includes a WAN device 10, a LAN device 20, a WAN device management apparatus 30, and a LAN device management apparatus 40. The number of each of these devices and apparatuses may be more than one.

The WAN device 10, the LAN device 20, and the LAN device management apparatus 40 are connected to one another via a LAN, such as a wireless LAN.

The WAN device 10 and the WAN device management apparatus 30 are connected to each other and the LAN device management apparatus 40 and the WAN device management apparatus 30 are connected to each other via a WAN, which is, for example, the Internet (cloud).

The WAN device 10 is an information terminal that is managed by the WAN device management apparatus 30 via the WAN and is, for example, a dedicated terminal, such as a videoconference terminal, an electronic whiteboard, or a digital signage display, or a terminal, such as a tablet, a smartphone, or a personal computer (PC). The WAN device 10 may have, for example, a communication function for, for example, a videoconference with another WAN device 10 via the WAN. In the information processing system 1, the types of terminals and the numbers of terminals are not specifically limited. The WAN devices 10 may be devices of the same type or different types.

The LAN device 20 is an information terminal managed by the LAN device management apparatus 40 via the LAN and is, for example, a multifunctional peripheral (MFP).

The WAN device management apparatus 30 is, for example, a server PC and manages the WAN device 10 via the WAN. The WAN device management apparatus 30 resides on, for example, the cloud and operated by an operator that performs maintenance and so on of the WAN device 10.

The LAN device management apparatus 40 is, for example, a PC and manages the LAN device 20 via the LAN. The LAN device management apparatus 40 manages the WAN device 10 and, for example, changes the settings of the WAN device 10 via the WAN device management apparatus 30. The LAN device management apparatus 40 resides on the LAN of, for example, an office and operated by the administrator of the office.

### Example Hardware Configurations

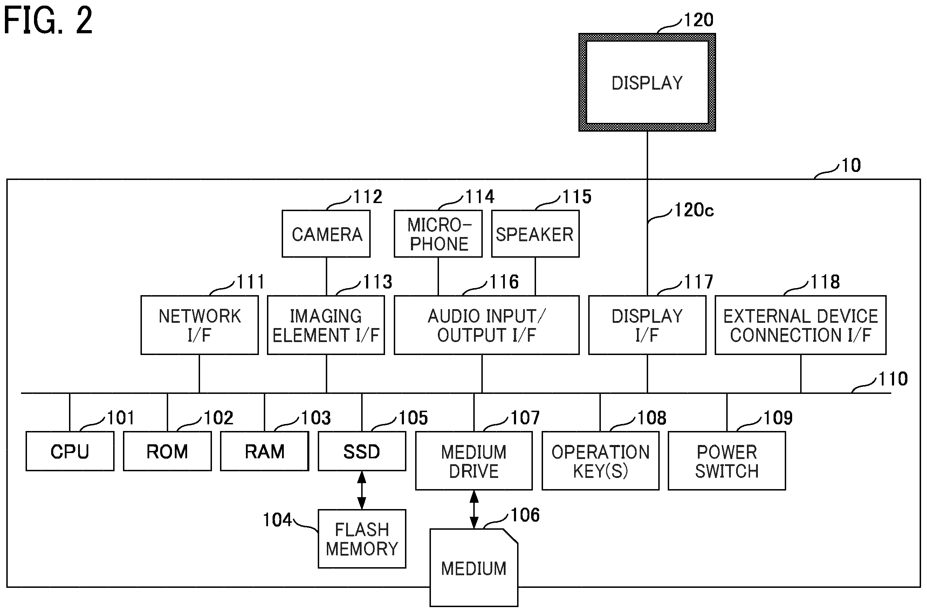

FIG. 2 is a block diagram illustrating an example hardware configuration of the WAN device 10 according to an embodiment. As illustrated, the WAN device 10 includes a central processing unit (CPU) 101, a read-only memory (ROM) 102, and a random access memory (RAM) 103. The WAN device 10 further includes a flash memory 104, a solid-state drive (SSD) 105, a medium drive 107, an operation key 108, and a power switch 109. The WAN device 10 further includes a network interface (I/F) 111, a camera 112, an imaging element I/F 113, a microphone 114, a speaker 115, an audio input/output I/F 116, a display I/F 117, and an external device connection I/F 118. These hardware devices are connected to one another via a bus line 110.

The CPU 101 is an arithmetic device that performs operations to implement processing and data processing that are performed by the WAN device 10. Further, the CPU 101 is a control device that controls each hardware device. Accordingly, the CPU 101 controls overall operations of the WAN device 10.

The ROM 102, the RAM 103, the flash memory 104, and the SSD 105 are examples of memory devices. For example, the ROM 102 stores a program, such as an initial program loader (IPL), used to drive the CPU 101. The RAM 103 is an example of a main memory device and is used as, for example, a work area of the CPU 101. In the flash memory 104, the SSD 105 stores a terminal program and data, such as image data and audio data, in accordance with control by the CPU 101.

The medium drive 107 allows a medium 106, which is a recording medium, such as a flash memory or an optical disk, to be connected to the WAN device 10. The medium drive 107 reads/writes data from/to the medium 106.

An information processing program for implementing processing that is performed by the WAN device 10 is provided via, for example, the medium 106. When the medium 106 to which the information processing program is recorded is put into the medium drive 107, the information processing program is installed in the SSD 105 from the medium 106 via the medium drive 107. The information processing program need not be installed from the medium 106 and may be downloaded from another computer via a network.

The medium 106 is, for example, a portable recording medium, such as a compact disc read-only memory (CD-ROM), a digital versatile disk (DVD), or a universal serial bus (USB) memory. The medium 106 and any of the memory devices including the SSD 105 correspond to computer-readable recording media.

The operation key 108 is an example of an input device for receiving user operations. For example, the operation key 108 is used in a case of, for example, selecting a counterpart with which the WAN device 10 communicates.

The power switch 109 is used in a switching operation of turning ON and OFF the power of the WAN device 10.

The network I/F 111 is an interface for allowing the WAN device 10 to be connected to a network. For example, the network I/F 111 is used to transmit/receive data to/from an external apparatus via a communication network.

The camera 112 captures an image of a subject and generates image data. The camera 112 is controlled by the imaging element I/F 113. That is, the imaging element I/F 113 transmits image data generated by the camera 112 to an external apparatus via a communication network, for example.

The microphone 114 receives sound and generates audio data. The speaker 115 outputs sound based on audio data. The audio input/output I/F 116 controls the microphone 114 and the speaker 115 individually.

The display I/F 117 allows a display 120 to be connected via a cable 120c. The display 120 is an example of an output device that displays, for example, images and icons for operations. The cable 120c is, for example, a cable for analog RGB (VGA) signals, component video, High-Definition Multimedia Interface (HDMI) (registered trademark), or Digital Visual Interface (DVI). The external device connection I/F 118 controls communication with a USB memory and external devices (such as a camera, a speaker, and a microphone).

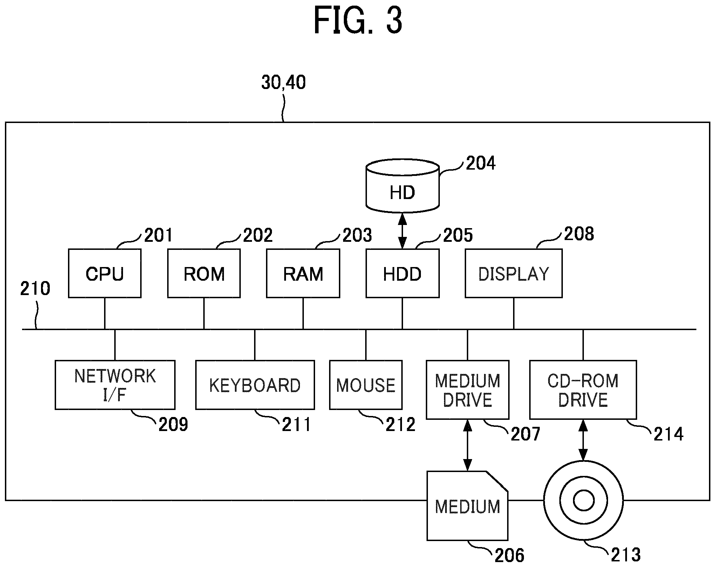

FIG. 3 is a block diagram illustrating an example hardware configuration of each of the WAN device management apparatus 30 and the LAN device management apparatus 40 according to an embodiment. For example, the WAN device management apparatus 30 and the LAN device management apparatus 40 may have the same hardware configuration. Hereinafter, a description is given of, for example, the WAN device management apparatus 30.

The WAN device management apparatus 30 includes a CPU 201, a ROM 202, a RAM 203, a hard disk (HD) 204, a hard disk drive (HDD) 205, a medium drive 207, a display 208, and a network I/F 209. The WAN device management apparatus 30 further includes a keyboard 211, a mouse 212, and a CD-ROM drive 214. These hardware devices are connected to one another via a bus line 210.

The CPU 201 is an arithmetic device that performs operations to implement processing and data processing that are performed by the WAN device management apparatus 30. Further, the CPU 201 is a control device that controls each hardware device. Accordingly, the CPU 201 controls overall operations of the WAN device management apparatus 30.

The ROM 202, the RAM 203, the HD 204, and the HDD 205 are examples of memory devices. For example, the ROM 202 stores a program, such as an IPL, used to drive the CPU 201. The RAM 203 is an example of a main memory device and is used as, for example, a work area of the CPU 201. In the HD 204, the HDD 205 stores predetermined data in accordance with control by the CPU 201.

The medium drive 207 allows a medium 206, which is a recording medium, such as a flash memory or an optical disk, to be connected to the WAN device management apparatus 30. The medium drive 207 reads/writes data from/to the medium 206.

An information processing program for implementing processing that is performed by the WAN device management apparatus 30 is provided via, for example, the medium 206. When the medium 206 to which the information processing program is recorded is put into the medium drive 207, the information processing program is installed in the HDD 205 from the medium 206 via the medium drive 207. The information processing program need not be installed from the medium 206 and may be downloaded from another computer via a network.

The medium 206 is, for example, a portable recording medium, such as a CD-ROM, a DVD, or a USB memory. The medium 206 and any of the memory devices including the HDD 205 correspond to computer-readable recording media.

The display 208 is an example of an output device that displays, for example, images and icons for operations.

The network I/F 209 is an interface for allowing the WAN device management apparatus 30 to be connected to a network. For example, the network I/F 209 is used to transmit/receive data to/from an external apparatus via a communication network.

The keyboard 211 and the mouse 212 are examples of input devices for receiving user operations.

The CD-ROM drive 214 allows a medium 213, which is a recording medium, such as a CD-ROM, to be connected to the WAN device management apparatus 30. The CD-ROM drive 214 reads/writes data from/to the medium 213.

### Example Functional Configuration

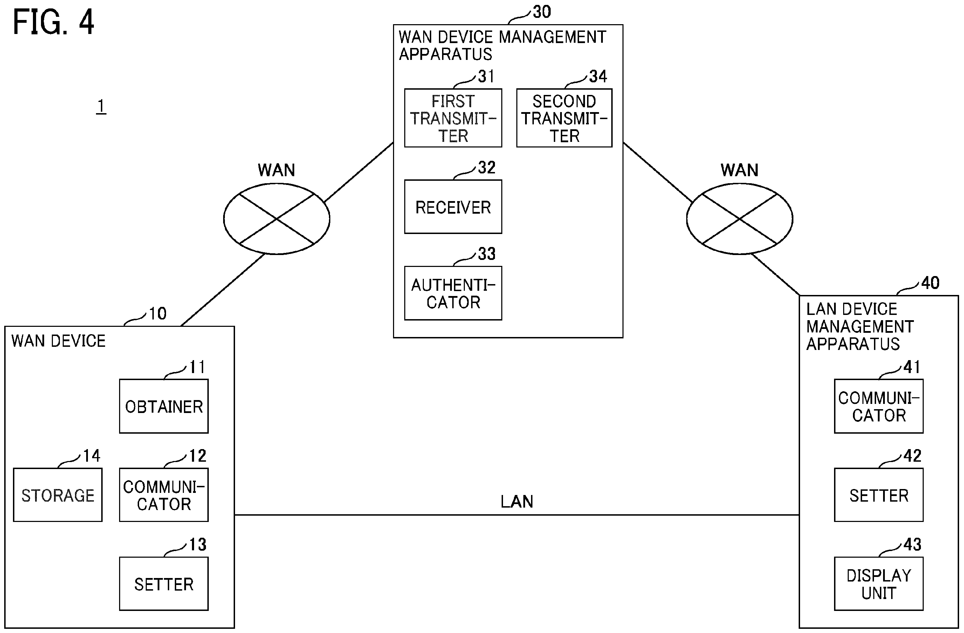

Now, a functional configuration of each of the apparatuses and device included in the information processing system 1 according to an embodiment is described with reference to FIG. 4. FIG. 4 is a functional block diagram illustrating an example functional configuration of the information processing system 1 according to an embodiment.

### WAN Device

The WAN device 10 includes an obtainer 11, a communicator 12, and a setter 13. These units are implemented as processing that one or more programs installed on the WAN device 10 cause the CPU 101 of the WAN device 10 to perform.

The obtainer 11 obtains from the WAN device management apparatus 30 an access token (an example of "authentication data") for transferring the authority to perform a setting operation for the WAN device 10 from the WAN device management apparatus 30 to the LAN device management apparatus 40.

The communicator 12 receives a discovery request broadcast from the LAN device management apparatus 40 and transmits the access token obtained by the obtainer 11 to the LAN device management apparatus 40.

The setter 13 performs various setting operations for the WAN device 10 in accordance with a setting change request received from the LAN device management apparatus 40 via the WAN device management apparatus 30.

The WAN device 10 further includes a storage 14. The storage 14 is implemented by using, for example, an auxiliary memory device, such as the SSD 105.

The storage 14 stores a client certificate for obtaining the access token from the WAN device management apparatus 30 and further stores the access token obtained from the WAN device management apparatus 30.

### WAN Device Management Apparatus

The WAN device management apparatus 30 includes a first transmitter 31, a receiver 32, an authenticator 33, and a second transmitter 34. These units are implemented as processing that one or more programs installed on the WAN device management apparatus 30 cause the CPU 201 of the WAN device management apparatus 30 to perform.

The first transmitter 31 transmits an access token issued by the authenticator 33 to the WAN device 10.

The receiver 32 receives from the LAN device management apparatus 40 a setting change request for the WAN device 10 and the access token.

The authenticator 33 authenticates the WAN device 10 by using the client certificate. The authenticator 33 issues the access token to the WAN device 10 that is successfully authenticated by using the client certificate.

The authenticator 33 determines whether the setting change is allowed on the basis of the access token received from the LAN device management apparatus 40 by the receiver 32.

In a case where the authenticator 33 allows the setting change, the second transmitter 34 transmits the setting change request received by the receiver 32 to the WAN device 10.

### LAN Device Management Apparatus

The LAN device management apparatus 40 includes a communicator 41, a setter 42, and a display unit 43. These units are implemented as processing that one or more programs installed on the LAN device management apparatus 40 cause the CPU of the LAN device management apparatus 40 to perform.

The communicator 41 broadcasts a discovery (an example of "discovery request") over a predetermined network, such as an intra-company LAN, and receives the access token of the WAN device management apparatus 30 from the WAN device 10 that receives the discovery.

The setter 42 memorizes the WAN device 10 and the LAN device 20 that respond to the discovery transmitted from the communicator 41 as management targets.

The setter 42 transmits a setting change request and the access token to the WAN device management apparatus 30 in accordance with a user operation and performs a setting operation for the WAN device 10.

The display unit 43 displays a list of the WAN devices 10 and the LAN devices 20 and accepts a setting change operation from a user.

### Processing

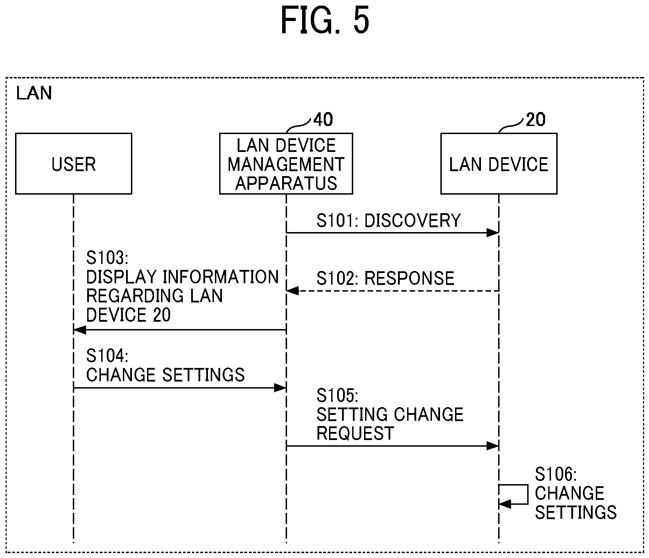

Now, a process for managing the LAN device 20 is described with reference to FIG. 5. FIG. 5 is a sequence chart illustrating an example process for managing the LAN device 20, performed by the information processing system 1, according to an embodiment.

In step S101, the communicator 41 of the LAN device management apparatus 40 transmits a discovery request to the LAN device 20 in response to a predetermined user operation or at regular intervals, for example. Here, the LAN device management apparatus 40 broadcasts the discovery request within the LAN.

Subsequently, the LAN device 20 transmits a response to the received discovery request to the LAN device management apparatus 40 (step S102). Here, the response includes data, such as a communication address set for the LAN device 20.

Subsequently, the display unit 43 of the LAN device management apparatus 40 displays information regarding the LAN device 20 obtained from the LAN device 20 on a screen displayed on the display 208 (step S103). The information regarding the LAN device 20 may be included in the response received in step S102 or may be obtained by making a separate request using the communication address of the LAN device 20 included in the response received in step S102.

Subsequently, the display unit 43 of the LAN device management apparatus 40 accepts a user operation for changing the settings of the LAN device 20, for example, through the keyboard 211, mouse 212, or a touch panel (step S104).

Subsequently, the setter 42 of the LAN device management apparatus 40 transmits a setting change request to the LAN device 20 in accordance with the user operation (step S105).

Subsequently, the LAN device 20 changes the settings of the LAN device 20 in accordance with the received request (step S106).

Accordingly, for example, the system administrator of, for example, an office can perform a setting operation and so on for, for example, an MFP that is newly placed in the office and connected to a LAN of the office.

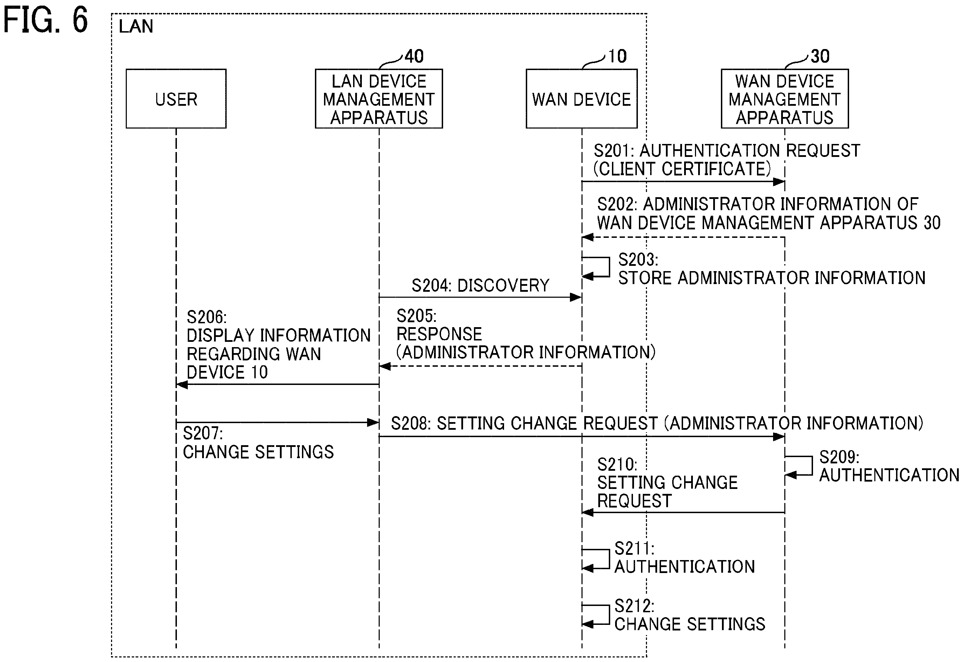

Now, a process for managing the WAN device 10 is described with reference to FIG. 6. FIG. 6 is a sequence chart illustrating an example process for managing the WAN device 10, performed by the information processing system 1, according to an embodiment.

In step S201, the obtainer 11 of the WAN device 10 uses a client certificate to have the WAN device 10 authenticated by the WAN device management apparatus 30 upon, for example, activation. Here, the client certificate may be, for example, installed in advance on the WAN device 10. The WAN device management apparatus 30 uses the client certificate transmitted from the WAN device 10 that sends a request for authentication to authenticate the request sender, and establishes a Transport Layer Security (TLS) connection with the WAN device 10.

In step S201, the WAN device 10 may have itself authenticated using, for example, a user ID and a password input by the user or biological information, such as a fingerprint, of the user instead of using the client certificate.

Subsequently, the first transmitter 31 of the WAN device management apparatus 30 transmits to the WAN device 10 a uniform resource locator (URL) for management and administrator information (access token) of the WAN device management apparatus 30 issued by the authenticator 33 (step S202). Here, the administrator information of the WAN device management apparatus 30 is an access token for transferring the authority to perform a setting operation for the WAN device 10 to the LAN device management apparatus 40. The administrator information of the WAN device management apparatus 30 may include, for example, information, such as a user ID and a password, used to log into the WAN device management apparatus 30 as a user (such as an administrator) having predetermine authority.

Here, the authenticator 33 manages (stores) in advance the user account of each WAN device 10 and administrator authentication information in association with the ID of the WAN device 10, which is "Common Name", included in the client certificate, for example. Then, the authenticator 33 generates an access token on the basis of administrator authentication information that is associated with "Common Name" included in the client certificate received in step S201.

Subsequently, the storage 14 of the WAN device 10 stores the received administrator information of the WAN device management apparatus 30 and the received URL for management (step S203).

Subsequently, the LAN device management apparatus 40 transmits a discovery request to the WAN device 10 in response to a predetermined user operation or at regular intervals, for example (step S204). Here, the LAN device management apparatus 40 broadcasts the discovery request within the LAN.

Subsequently, the communicator 12 of the WAN device 10 transmits a response to the received discovery request to the LAN device management apparatus 40 (step S205). Here, the response includes data, such as a communication address set for the WAN device 10, and the administrator information of the WAN device management apparatus 30 and the URL for management stored in step S203. After transmitting the administrator information of the WAN device management apparatus 30 in step S205, the WAN device 10 may erase the stored administrator information of the WAN device management apparatus 30. Accordingly, even in a case where, for example, another apparatus copies and retransmits the received discovery request, it is possible to prevent the administrator information of the WAN device management apparatus 30 from being compromised.

Subsequently, the display unit 43 of the LAN device management apparatus 40 displays information regarding the WAN device 10 obtained from the WAN device 10 on a screen on the display 208 (step S206). The information regarding the WAN device 10 may be included in the response received in step S205 or may be obtained by making a separate request using the communication address of the WAN device 10 included in the response received in step S205.

Subsequently, the display unit 43 of the LAN device management apparatus 40 accepts a user operation for changing the settings of the WAN device 10, for example, through the keyboard 211, mouse 212, or a touch panel (step S207).

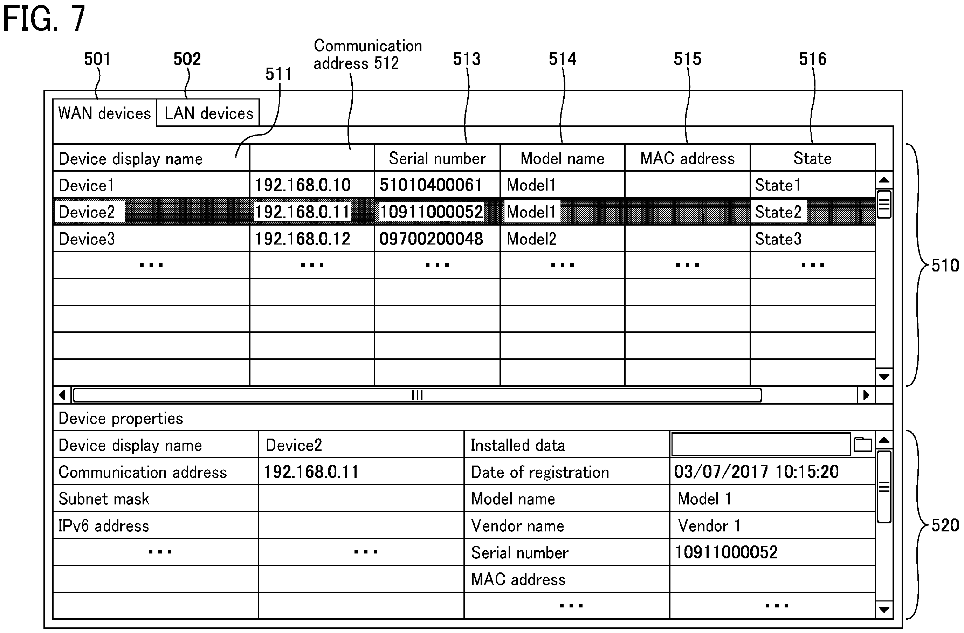

FIG. 7 is a diagram illustrating an example management screen of the LAN device management apparatus 40. In step S207, the LAN device management apparatus 40 accepts a user operation performed on the management screen as illustrated in FIG. 7. In the example illustrated in FIG. 7, when the user selects either the "WAN devices" tab 501 or the "LAN devices" tab 502, the LAN device management apparatus 40 accepts the selection of devices, namely, the WAN devices 10 or the LAN devices 20, to be displayed in a list. In the example illustrated in FIG. 7, the "WAN devices" tab 501 is selected.

In the area 510 where a list of devices is displayed, the device display name 511, the communication address 512, the serial number 513, the model name 514, the MAC address 515, the state 516, and so on of each WAN device 10 are displayed in a list. In the area 520 for performing a setting operation for the WAN device 10 that is selected in the list, each item, such as the device display name, can be set.

Referring back to FIG. 6, the setter 42 of the LAN device management apparatus 40 transmits a setting change request to the WAN device management apparatus 30 in accordance with the user operation (step S208). Here, the LAN device management apparatus 40 transmits the setting change request addressed to the URL for management described above by, for example, using a browser program installed on the LAN device management apparatus 40 and via communication compliant with TLS or Hypertext Transfer Protocol (HTTP). The setting change request includes the administrator information of the WAN device management apparatus 30 received in the process in step S205.

Subsequently, the authenticator 33 of the WAN device management apparatus 30 performs authentication on the basis of the received administrator information (step S209).

Subsequently, in a case where the authentication is successful, the second transmitter 34 of the WAN device management apparatus 30 transmits a request based on the received setting change request to the WAN device 10 (step S210). Here, the communication address of the WAN device 10 may be registered in advance to the WAN device management apparatus 30. Regarding the communication address of the WAN device 10, the communication address set for the WAN device 10 may be communicated to the LAN device management apparatus 40 via, for example, Dynamic Host Configuration Protocol (DHCP) in the response to the discovery request in step S205, and the communication address may also be communicated to the WAN device management apparatus 30 in step S208. In a case where the authentication fails, the WAN device management apparatus 30 notifies the LAN device management apparatus 40 of the authentication failure and ends the process.

Subsequently, the setter 13 of the WAN device 10 authenticates the WAN device management apparatus 30 on the basis of the received request (step S211).

Subsequently, in a case where the authentication is successful, the setter 13 of the WAN device 10 changes the settings of the WAN device 10 in accordance with the received request (step S212).

Accordingly, the system administrator of, for example, an office can perform a setting operation and so on for the WAN device 10, which is, for example, a videoconference terminal, connected to a LAN of the office while maintaining the system configuration in which, for example, only the WAN device management apparatus 30 controls the WAN device 10 and, for example, changes the settings of the WAN device 10.

The processes according to the embodiment of the present invention are performed by not only the apparatuses and devices described above. That is, in an embodiment of the present invention, the processes may be performed by an apparatus or a device other than the apparatuses and devices described above. Further, the processes may be performed in a redundant, distributed, or parallel manner or a combination thereof.

The embodiment of the present invention may be implemented as a program for causing a computer, which is, for example, an information terminal, an information processing apparatus, or an information processing system including one or more information processing apparatuses, to perform an information processing method.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. An information terminal (10) comprising:
an obtainer (11) configured to obtain authentication data from a first information processing apparatus (30);
a communicator (12) configured to receive a discovery request broadcast from a second information processing apparatus (40) and to transmit the obtained authentication data to the second information processing apparatus (40), the second information processing apparatus (40) residing on a network different from a network where the first information processing apparatus (30) resides; and
a setter (13) configured to perform a setting operation for the information terminal (10) in accordance with a setting change request received from the second information processing apparatus (40) via the first information processing apparatus (30), the second information processing apparatus (40) being authenticated by the first information processing apparatus (30) using the authentication data.

2. The information terminal (10) according to claim 1,
wherein the communicator (12) is configured to transmit data representing a state of the information terminal (10) and a communication address of the information terminal (10) to the second information processing apparatus (40) in response to the discovery request.

3. The information terminal (10) according to claim 1 or 2,
wherein the authentication data includes administrator information of the first information processing apparatus (30), the administrator information being information for the information terminal (10).

4. An information processing apparatus (30) comprising:
a first transmitter (31) configured to transmit to an information terminal (10) authentication data for transferring authority to perform a setting operation for the information terminal (10);
a receiver (32) configured to receive a setting change request for a setting change for the information terminal (10) and the authentication data from other information processing apparatus (40), the other information processing apparatus (40) residing on a network different from a network where the information processing apparatus (30) resides;
an authenticator (33) configured to determine whether the setting change is allowed on the basis of the received authentication data; and
a second transmitter (34) configured to transmit the received setting change request to the information terminal (10) based on a determination that the setting change is allowed.

5. An information processing apparatus (40) comprising:
a communicator (41) configured to broadcast a discovery request for requesting a response from an information terminal (10) and to receive, from the information terminal (10) that receives the discovery request, authentication data of other information processing apparatus (30) for managing the information terminal (10), the information processing apparatus (40) residing on a network different from a network where the other information processing apparatus (30) resides; and
a setter (42) configured to transmit a setting change request and the authentication data to the other information processing apparatus (30) in accordance with a user operation to perform a setting operation for the information terminal (10).

6. An information processing system (1) comprising:
an information terminal (10);
a first information processing apparatus (30); and
a second information processing apparatus (40) that resides on a network different from a network where the first information processing apparatus (30) resides,
the information terminal (10) including:
an obtainer (11) configured to obtain authentication data from the first information processing apparatus (30);
a first communicator (12) configured to receive a discovery request broadcast from the second information processing apparatus (40) and to transmit the obtained authentication data to the second information processing apparatus (40); and
a first setter (13) configured to perform a setting operation for the information terminal (10) in accordance with a setting change request received from the second information processing apparatus (40) via the first information processing apparatus (30), the second information processing apparatus (40) being authenticated by the first information processing apparatus (30) using the authentication data,
the first information processing apparatus (30) including:
a first transmitter (31) configured to transmit the authentication data to the information terminal (10);
a receiver (32) configured to receive the setting change request for a setting change for the information terminal (10) and the authentication data from the second information processing apparatus (40);
an authenticator (33) configured to determine whether the setting change is allowed on the basis of the received authentication data; and
a second transmitter (34) configured to transmit the received setting change request to the information terminal (10) based on a determination that the setting change is allowed,
the second information processing apparatus (40) including:
a second communicator (41) configured to broadcast the discovery request and to receive, from the information terminal (10) that receives the discovery request, the authentication data of the first information processing apparatus (30); and
a second setter (42) configured to transmit the setting change request and the authentication data to the first information processing apparatus (30) in accordance with a user operation to perform a setting operation for the information terminal (10).

7. An information processing method performed by an information terminal (10), the method comprising:
obtaining authentication data from a first information processing apparatus (30);
receiving a discovery request broadcast from a second information processing apparatus (40);
transmitting the authentication data obtained in the obtaining to the second information processing apparatus (40); and
performing a setting operation for the information terminal (10) in accordance with a setting change request received from the second information processing apparatus (40) via the first information processing apparatus (30), the second information processing apparatus (40) being authenticated by the first information processing apparatus (30) using the authentication data.

8. The method of claim 7, further comprising:
transmitting data representing a state of the information terminal and a communication address of the information terminal to the second information processing apparatus (40) in response to the discovery request.

9. The method of claim 7,
wherein the authentication data includes administrator information of the first information processing apparatus, the administrator information being information for the information terminal.

10. A carrier means carrying computer readable code for controlling a computer to carry out the method of any one of claims 7 to 9.
